# EUROPÄISCHE PATENTSCHRIFT

(11) **EP 2 424 709 B1**
(45) Veröffentlichungstag und Bekanntmachung des Hinweises auf die Patenterteilung: **05.06.2013**
(21) Anmeldenummer: 10708186.1
(22) Anmeldetag: 09.03.2010
(51) Int. Cl.: B23P 15/10, F02F 3/22, F16J 1/09, F02F 3/00

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE FABRICATION D'UN PISTON POUR UN MOTEUR À COMBUSTION INTERNE

(30) Priorität: 27.04.2009 DE 102009002653
(43) Veröffentlichungstag der Anmeldung: 07.03.2012
(73) Patentinhaber: Federal-Mogul Nürnberg GmbH, 90441 Nürnberg (DE)
(72) Erfinder: GÖDEL, Peter, 86495 Freienried (DE); MATZ, Marc-Manuel, 86438 Kissing (DE); CROMME, Wolfram, 90461 Nürnberg (DE); LADES, Klaus, 90459 Nürnberg (DE); DÖRNENBURG, Frank, 91207 Lauf (DE)
(74) Vertreter: HOFFMANN EITLE
(86) Internationale Anmeldenummer: PCT/EP2010/052950
(87) Internationale Veröffentlichungsnummer: WO 2010/124894

(56) Entgegenhaltungen:
- EP-A1- 1 536 125
- WO-A1-82/03814
- DE-A1- 19 649 363
- DE-A1- 19 807 176
- DE-A1-102004 003 980
- DE-B3-102005 047 035
- JP-A- 2000 213 413

## Beschreibung

### Technisches Gebiet

Die Erfindung betrifft ein Verfahren zur Herstellung eines Kolbens für einen Verbrennungsmotor nach dem Oberbegriff des Anspruchs 1.

Kolben für Verbrennungsmotoren werden, wenn sie für Dieselmotoren bestimmt sind, nahezu zu hundert Prozent mittels Schwerkraftkokillenguss hergestellt. Dies gilt ferner für einen Großteil der Kolben für Ottomotoren. Im Rahmen der Entwicklung zu immer kleineren, aber gleichzeitig leistungsfähigeren Motoren treten immer höhere Druckbelastungen auf. Dies bedeutet höhere Belastungen an dem ersten Kolbenring und der ersten Ringnut des Kolbens, in dem dieser aufgenommen ist. Insbesondere hoch belastete Kolben für Ottomotoren werden in Zukunft mit Verschleißschutzbewehrungen versehen werden müssen, um die Lebensdauer und das Betriebsverhalten der Kolben und Kolbenringe zu verbessern.

### Stand der Technik

Auf dem Gebiet der Ottomotorkolben sind Vorbenutzungsgegenstände bekannt, bei denen die hoch belastete erste Ringnut lokal mit einer elektrisch aufgebrachten Aluminiumoxidschicht armiert ist, um den hohen Flächenpressungen und Verschleißbeanspruchungen in der ersten Ringnut standzuhalten.

Bei Dieselmotorkolben ist es bereits Standard, und es könnte für Ottomotorkolben zusehends erforderlich werden, Ringträger einzugießen, was jedoch in technischer Hinsicht sehr aufwändig ist. Auf dem betreffenden Gebiet ist es insbesondere für Dieselmotorkolben, die üblicherweise einen Kühlkanal aufweisen, ferner bekannt, einen Ringträger, der mit einem Kühlkanal kombiniert ist, manuell in die Kokille einzulegen. Dieser kann nach dem sogenannten Alfin-Verfahren vor dem Einlegen in die Kokille in flüssiges Aluminium getaucht werden und ist somit beim Umgießen vollständig mit teilerstarrtem Aluminium benetzt. Dies bedeutet eine besonders gute metallische Bindung zwischen dem Ringträger und dem umgebenden Kolbenmaterial. Der Kühlkanal kann einen Formkern, beispielsweise aus Salz aufweisen, der nach der Erstarrung des Kolbenrohlings ausgewaschen werden kann.

Aus der DE 198 07 176 C2 ist ein Verfahren zur Herstellung eines Kolbens für einen Verbrennungsmotor nach dem Oberbegriff des Anspruchs 1 bekannt, bei dem der Bereich der obersten Ringnut und des Kühlkanals zunächst ausgespart wird, dann durch einen radial innen spannenden Abdeckring abgedeckt wird, so dass nachfolgend die verbleibende Nut, aus der später die Ringnut herausgearbeitet wird, beispielsweise durch thermisches Spritzen aufgefüllt werden kann.

Gemäß der DE 196 49 363 C2 wird der betroffene Bereich durch einen Schmelzkern gebildet, dessen äußerer Ring später entfernt wird, um diesen Bereich mit Verstärkungsmaterial zu füllen. Nachfolgend wird auch der innere Bereich des Schmelzkerns entfernt, um den Kühlkanal auszubilden.

Die EP 1 536 125 A1 beschreibt einen Kolben, bei dem in dem Kolbenoberteil eine Ausnehmung vorhanden ist, die mit einem ein- oder mehrteiligen Abdeckelement zur Bildung eines Kühlkanals verschlossen wird.

Aus der DE 10 2004 003 980 A1 geht ein Verfahren zur Herstellung eines geschlossenen Kühlkanals eines Kolbens aus geschmiedetem Stahl hervor, bei dem zunächst eine radial nach außen weisende, umlaufende Öffnung eingedreht wird, die nachfolgend durch zwei halbkreisförmige Elemente verschlossen wird.

Die WO 82/03814 A1 betrifft ein Verfahren zur Herstellung eines Kolbens, bei dem der Bereich einer Kolbenringnut zunächst spanend bearbeitet wird und nachfolgend zur Ausbildung eines Legierungsbereichs mit einem Elektronen- oder Laserstrahl bearbeitet wird. Aus dem so behandelten Bereich wird nachfolgend die Kolbenringnut herausgearbeitet.

JP 2000/213413 bildet weiteren Stand der Technik.

Schließlich beschreibt die DE 10 2005 047 035 B3 ein Verfahren zur Herstellung eines Kolbens für einen Verbrennungsmotor, bei dem lediglich der Kühlkanal mit einer entfernbaren Masse gefüllt wird, und die äußere Radialnut, aus der später die erste Ringnut herausgearbeitet wird, mit Verstärkungsmaterial gefüllt wird. Nachfolgend wird die entfernbare Masse entfernt, so dass ein ringförmiger Kühlkanal verbleibt.

### Darstellung der Erfindung

Der Erfindung liegt die Aufgabe zugrunde, ein Verfahren zur Herstellung eines Kolbens für einen Verbrennungsmotor zu schaffen, mit dem ein derartiger Kolben besonders effizient herstellbar ist, und darüber hinaus die an ihn gestellten Anforderungen erfüllt. Ferner soll gemäß der vorliegenden Offenbarung ein entsprechender Kolben geschaffen werden.

Die Lösung dieser Aufgabe erfolgt zum einen durch das in Anspruch 1 beschriebene Verfahren.

Demzufolge wird bei der Herstellung eines Kolbens für einen Verbrennungsmotor ein Bereich, der bei dem fertigen Kolben einen Kühlkanal und eine Kolbenringnut aufweist, zunächst ausgespart, und der spätere Kühlkanal nachfolgend abgedeckt oder verschlossen. Auf den "Verschluss" wird Material zur Aufnahme des Kolbenrings aufgetragen. Das erfindungsgemäße

Verfahren erhält seine besondere Effizienz dadurch, dass zur Abdeckung des Kühlkanals Drahtmaterial verwendet wird, das mit einer Länge bereitgestellt wird, die größer ist als die für einen einzigen Kolben notwendige Länge. Mit anderen Worten werden nicht, im Hinblick auf ihre Abmessung individuell angepasste Ringe oder dergleichen bereitgestellt, sondern Drahtmaterial kann beispielsweise von einer Rolle fortlaufend abgewickelt werden, in die Aussparung derart eingebracht werden, dass der Kühlkanal abgedeckt wird, und bei Erreichen der erforderlichen Länge kann das Drahtmaterial abgetrennt werden. Die vorangehend genannten und zahlreiche der nachfolgend erwähnten, bevorzugten Verfahrensschritte können automatisiert werden, so dass die Herstellung des erfindungsgemäßen Kolbens besonders einfach wird.

Der Bereich, der bei dem fertigen Kolben einen Kühlkanal und eine Kolbenringnut aufweist, kann bereits beim Gießen ausgespart werden oder in geeigneter Weise vorbearbeitet werden. Ferner sind für die Geometrie sowohl des Kühlkanals als auch der für das Verstärkungsmaterial und als Ringträger dienende Material vorgesehenen Nut wenig Anforderungen zu beachten. Der Kühlkanal kann bezüglich einer Ebene senkrecht zur Kolbenachse und durch die Mitte des Abdeckmaterials symmetrisch sein, er kann sich jedoch auch überwiegend unterhalb der genannten Ebene befinden, und seine Oberkante kann sich auf einer Höhe mit der Oberkante des Abdeckmaterials befinden. Ferner ist es für den Kühlkanal in seinem zur Kolbenachse hin, und damit zu einer möglichen Brennraummulde hin gelegenen Bereich denkbar, dass seine Geometrie an die Form der Brennraummulde angepasst ist. Beispielsweise kann zwischen der Brennraummulde und dem Kühlkanal Material mit einer entlang der Kolbenachse konstanten Dicke verbleiben.

In jedem Fall kann durch die Bereitstellung des den Kühlkanal abdeckenden Drahtmaterials mit einer großen Länge, somit bevorzugt die fortlaufende, bezogen auf die für einen einzelnen Kolben benötigte Länge "endlose" Bereitstellung ein hoher Automatisierungsgrad erreicht werden, und insbesondere können bislang erforderliche, manuelle Arbeitsschritte wie das Vorbehandeln und Alfinieren von Ringträgern sowie das Einlegen derselben sowie von Formkernen in die Kokille und das Auswaschen oder Entformen der Formkerne entfallen.

Bevorzugte Weiterbildungen des erfindungsgemäßen Verfahrens sind in den weiteren Ansprüchen beschrieben.

Besonders effizient lässt sich das erfindungsgemäße Verfahren, wie oben erwähnt, realisieren, indem das den Kühlkanal abdeckende Drahtmaterial fortlaufend von einer Rolle abgewickelt wird.

Für die Anbringung des Drahtmaterials derart, dass der Kühlkanal abgedeckt wird, hat sich eine formschlüssige Anbringung, beispielsweise durch Verklemmen, als besonders vorteilhaft erwiesen.

In diesem Zusammenhang kann ferner eine zunächst gewählte Form des Drahtes, die beispielsweise als Massenmaterial Vorteile im Hinblick auf die Materialkosten bietet, beim Anbringen zum Abdecken des Kühlkanals verformt werden.

Im Hinblick auf die Form des Drahtquerschnitts ist derzeit an einen elliptischen, rechteckigen oder trapezförmigen Querschnitt gedacht, weil für derartige Querschnitte Vorteile bei der Befestigung an der Engstelle zwischen Kühlkanal und äußerer, radialer Nut Vorteile erwartet werden. Es sind jedoch beliebig andere Drahtgeometrien denkbar.

Für die insbesondere stoffschlüssige Verbindung zwischen dem abdeckenden Drahtmaterial und dem Kolbenwerkstoff und/oder dem Verstärkungsmaterial, das bevorzugt auf das abdeckende Drahtmaterial aufgebracht wird, um nachfolgend eine Ringnut herauszuarbeiten, erweist es sich als vorteilhaft, das Drahtmaterial vorzugsweise lokal begrenzt und vorzugsweise induktiv zu erwärmen.

Besonders bevorzugt wird in diesem Fall eine Erwärmung knapp unterhalb des Schmelzpunktes des Drahtwerkstoffs oder des Kolbenbasiswerkstoffs, um zum einen das Herstellungsverfahren nicht durch die notwendige Handhabung von geschmolzenem Material zu verkomplizieren und gleichzeitig metallurgisch die Voraussetzung für eine besonders gute Verbindung zwischen den oben genannten Materialien zu schaffen.

Wie bereits angedeutet wird im Rahmen des erfindungsgemäßen Verfahrens auf das abdeckende Drahtmaterial ein Verstärkungsmaterial mittels eines, vorzugsweise thermischen, Spritzverfahrens aufgebracht.

In diesem Zusammenhang bietet es besondere Vorteile, wenn zumindest zwei unterschiedliche Materialien gleichzeitig oder nacheinander aufgebracht werden, die vorzugsweise kontinuierlich als Drähte bereitgestellt werden, und deren Mischungsverhältnis beispielsweise durch unterschiedliche Drahtdurchmesser und/oder unterschiedliche Vorschubgeschwindigkeiten eingestellt wird.

Insbesondere werden besonders gute Eigenschaften erwartet, wenn als Materialien eine AlSi-Legierung und ein unlegierter Stahl kombiniert werden, und/oder das Mischungsverhältnis zwischen zwei unterschiedlichen Materialien bei 60 bis 70:30 bis 40 liegt. Die in den letzten beiden Absätzen genannten Maßnahmen sind von den weiteren Merkmalen dieser Anmeldung unabhängig und vorteilhaft, können aber damit kombiniert werden.

Die vorliegende Offenbarung bezieht sich ferner auf eine Vorrichtung zur Herstellung eines Kolbens für einen Verbrennungsmotor, die eine Einrichtung zur Bereitstellung von Drahtmaterial mit einer Länge aufweist, die grösser ist als die für die Abdeckung des Kühlkanals eines einzigen Kolbens erforderliche Länge. Hierbei kann es sich beispielsweise um eine Draht-Abwickelvorrichtung handeln.

Für das Anbringen des Drahtmaterials derart, dass der Kühlkanal abgedeckt wird, hat sich nach ersten Überlegungen ein Randrierwerkzeug, beispielsweise in Form einer Rolle, als besonders günstig erwiesen, das den angebrachten Draht zusätzlich verformen kann.

Die weiteren Einrichtungen entsprechen im Wesentlichen denjenigen, die zur Realisierung der oben genannten Verfahrensschritte erforderlich sind. Für eine möglichst umfangreiche Automatisierung können beispielsweise die Einrichtungen zum Aufbringen des Drahtmaterials und zu dessen Erhitzen sowie zum thermischen Aufspritzen von Verstärkungsmaterial in einer einzigen Maschine kombiniert werden.

Die vorliegende Offenbarung bezieht sich schließlich auf einen Kolben, der sich dadurch auszeichnet, dass er als Abdeckmaterial zwischen dem Kühlkanal und dem Verstärkungsmaterial zur Aufnahme des Kolbenrings ein Drahtmaterial aufweist, das fortlaufend von einer Rolle abgewickelt wurde, beim Anbringen verformt, und/oder nachfolgend in der oben beschriebenen Weise erhitzt wurde.

### Kurze Beschreibung der Zeichnungen

Nachfolgend wird die Erfindung anhand von beispielhaft in den Zeichnungen dargestellten Ausführungsformen näher erläutert. Es zeigen:
- Fig. 1: eine Schnittansicht eines oberen, seitlichen Bereichs eines Kolbenrohlings;
- Fig. 2: den Bereich von Fig. 1 mit einem eingebrachten Drahtmaterial und einem Werkzeug;
- Fig. 3: den Bereich von Fig. 2 mit verformtem Drahtmaterial und einer Heizeinrichtung;
- Fig. 4: den Bereich von Fig. 3 beim Aufbringen von Verstärkungsmaterial;
- Fig. 5: den Bereich der Figuren 1 bis 4 in fertig bearbeitetem Zustand;
- Fig. 6: den Bereich von Fig. 5 in einem anderen Beispiel
- Fig. 7: den Bereich von Fig. 5 in einem anderen Beispiel , und
- Figuren 8 und 9: die Situation von Fig. 2 mit alternativen Drahtgeometrien.

### Ausführliche Beschreibung bevorzugter Ausführungsformen der Erfindung

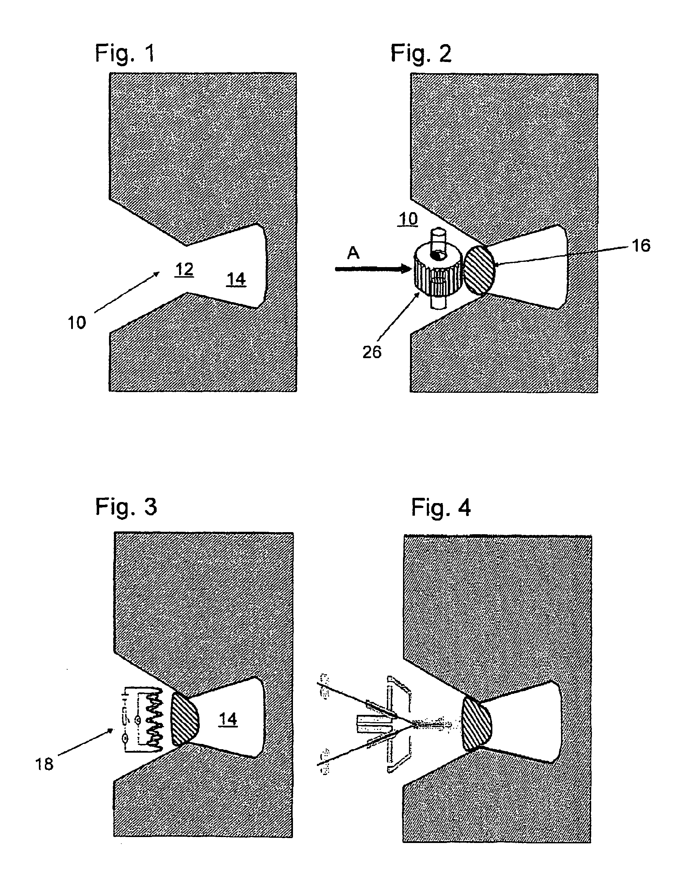

In Figur 1 ist im Schnitt ein Bereich eines Kolbenrohlings gezeigt, der nahe zu dem Kolbenboden (in Fig. 1 oben) und einer Außenseite des Kolbens liegt. Die gezeigte, zur Außenseite (in Fig. 1 links) offene, bei dem gezeigten Ausführungsbeispiel trapezförmige Nut 10 wird, wie nachfolgend noch genauer erläutert, mit Verstärkungsmaterial gefüllt, und anschließend mit einer Nut zur Aufnahme eines obersten Kolbenringes versehen. Die genannte Nut 10 erstreckt sich zu einer Engstelle 12, von der ausgehend eine weitere, sich zur Kolbenachse (in Fig. 1 rechts) erweiternde Nut 14 vorgesehen ist, die in dem gezeigten Beispiel ebenfalls trapezförmig ist. Diese Nut 14 wird, wie nachfolgend genauer erläutert, im Laufe des erfindungsgemäßen Verfahrens verschlossen und bildet bei dem fertigen Kolben einen Kühlkanal. Bei dem gezeigten Beispiel sind beide Nuten 10, 14 zu einer Ebene senkrecht zur Kolbenachse und etwa durch die Mitte der Engstelle 12 im Wesentlichen symmetrisch. Nachfolgend werden jedoch alternative Ausführungsformen erläutert, bei denen dies nicht der Fall ist.

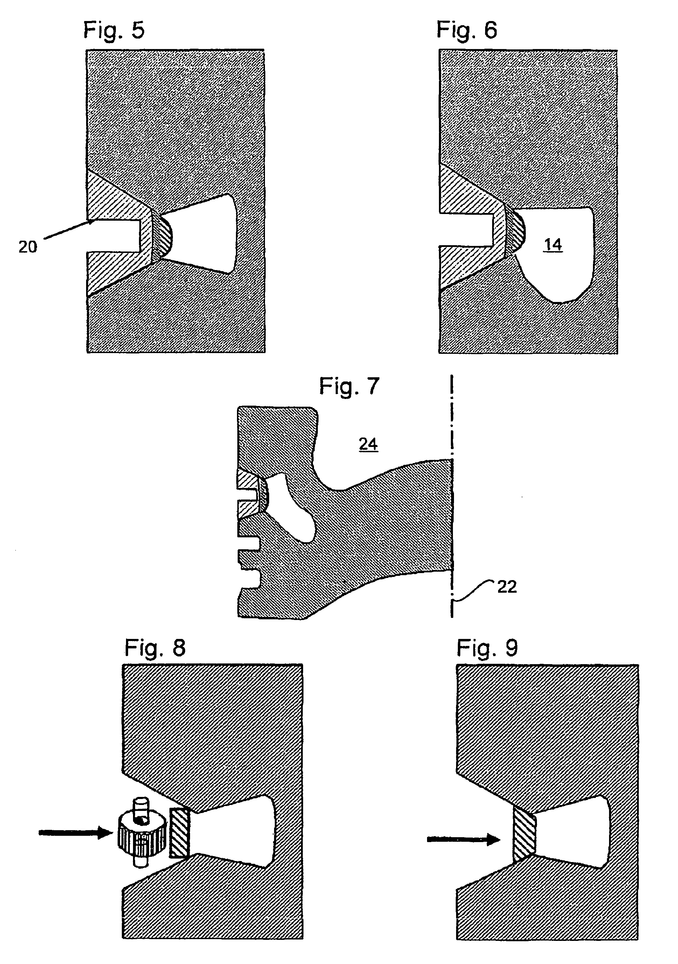

Wie in Fig. 2 gezeigt, wird im Rahmen des erfindungsgemäßen Verfahrens Drahtmaterial 16 derart in die Nut 10 eingebracht, dass es an der Engstelle 12 beispielsweise formschlüssig angebracht wird. Beim Beispiel von Fig. 2 weist das Drahtmaterial 16 einen im Wesentlichen elliptischen Querschnitt auf, wobei die längere Hauptachse etwas größer ist als die Abmessung der Engstelle 12, so dass die beschriebene Befestigung ermöglicht wird. Dies kann insbesondere durch ein Andrücken in Richtung des Pfeils A und beispielsweise durch ein geeignetes Randrierwerkzeug 26 durchgeführt werden. In dem gezeigten Beispiel ist das Randrierwerkzeug 26 im Wesentlichen zylindrisch und weist eine geriffelte Außenfläche auf, die ein wenig konkav gestaltet sein kann. Ebenso kann das Randrierwerkzeug 26 weitgehend zylindrisch oder nach außen konvex, mit anderen Worten ballig gestaltet sein. Alternativ könnte das Randrierwerkzeug 26 kegelstumpfförmig ausgeführt sein. Wie die Figuren 8 und 9 zeigen, können als weitere Drahtgeometrien ein weitgehend rechteckförmiger Querschnitt oder ein trapezförmiger Querschnitt, bei dem die breitere Seite nach außen zeigt, eingesetzt werden.

Wie aus Fig. 3 hervorgeht, kann das zum Abdecken der Kühlkanalnut 14 vorgesehene Drahtmaterial durch das Andrücken an seiner Außenseite etwas abgeflacht worden sein. In Fig. 3 ist ergänzend gezeigt, dass der Draht durch eine Heizeinrichtung 18, die beispielsweise induktiv ausgeführt sein kann, erwärmt werden kann.

Nachfolgend kann, wie in Fig. 4 gezeigt, beispielsweise durch thermisches Spritzen Verstärkungsmaterial auf das Drahtmaterial 16 aufgebracht werden, um in diesem Bereich die Voraussetzungen dafür zu schaffen, dass ein oberster Kolbenring dauerhaft und zuverlässig aufgenommen werden kann. Hierzu wird, wie in Fig. 5 im Ergebnis gezeigt, die äußere Nut vorzugsweise vollständig mit Verstärkungsmaterial gefüllt und anschließend an der zylindrischen Außenfläche des Kolbens derart fertigbearbeitet, dass es mit dieser weitgehend bündig ist. Ferner wird eine Kolbenringnut 20 eingearbeitet.

Aus Fig. 6 geht eine alternative Geometrie der Nut 14 für den Kühlkanal hervor, bei der sich diese von der Oberkante der Engstelle 12, d. h. bei dem fertig bearbeiteten Kolben von der Oberkante des Drahtmaterials 16 nach unten erstreckt, und bei der gezeigten Ausführungsform insbesondere über den unteren Rand der äußeren Nut 10 hinaus reicht. Bei dem gezeigten Beispiel ist die Kühlkanalnut 14 an ihrer Oberseite weitgehend eben, und an ihrer Unterseite gekrümmt.

Fig. 7 zeigt eine weitere alternative Ausgestaltung der Kühlkanalnut 14, die sich in dem Bereich oberhalb des Mittelpunktes der Engstelle 12 ähnlich darstellt wie die Ausführungsform der Figuren 1 bis 5, sich jedoch in ihrem unteren Bereich schräg nach unten und in Richtung der Kolbenachse 22 erstreckt, so dass eine Anpassung an die Geometrie einer Brennraummulde 24 erfolgt. Insbesondere kann der zu der Kolbenachse 22 gerichtete Bereich der Kühlkanalnut 14 derart gestaltet, beispielsweise derart gekrümmt sein, dass zwischen der Kühlkanalnut 14 und der Brennraummulde 24 ein "Steg" mit weitgehend gleichbleibender Dicke verbleibt und/oder der der Kolbenachse am nächsten kommende Bereich des Kühlkanals in etwa die gleiche oder eine geringere Distanz von der Kolbenachse 22 hat wie die von der Kolbenachse 22 am entferntesten liegende Stelle der Brennraummulde.

## Patentansprüche

1. Verfahren zur Herstellung eines Kolbens für einen Verbrennungsmotor, bei dem ein Bereich, der bei dem fertigen Kolben einen Kühlkanal (14) und eine Kolbenringnut (20) aufweist, zunächst ausgespart wird, der spätere Kühlkanal nachfolgend abgedeckt wird, und schließlich Material zur Aufnahme des Kolbenringes aufgetragen wird, **dadurch gekennzeichnet, dass** der spätere Kühlkanal durch Drahtmaterial (16) abgedeckt wird, das mit einer Länge, die größer ist als die für einen einzigen Kolben notwendige Länge, bereitgestellt wird.

2. Verfahren nach Anspruch 1, **dadurch gekennzeichnet, dass** das Drahtmaterial (16) fortlaufend von einer Rolle abgewickelt wird.

3. Verfahren nach einem der Ansprüche 1 oder 2, **dadurch gekennzeichnet, dass** das Drahtmaterial (16) formschlüssig angebracht wird.

4. Verfahren nach einem der Ansprüche 1 bis 3, **dadurch gekennzeichnet, dass** das Drahtmaterial (16) beim oder nach dem Anbringen verformt wird.

5. Verfahren nach einem der vorangehenden Ansprüche, **dadurch gekennzeichnet, dass** das Drahtmaterial (16) einen weitgehend elliptischen, rechteckigen oder trapezförmigen Querschnitt aufweist.

6. Verfahren nach einem der vorangehenden Ansprüche, **dadurch gekennzeichnet, dass** das Drahtmaterial (16) nach der Anbringung vorzugsweise lokal begrenzt und vorzugsweise induktiv erwärmt wird.

7. Verfahren nach Anspruch 6, **dadurch gekennzeichnet, dass** das Drahtmaterial (16) knapp unterhalb des Schmelzpunktes des Drahtmaterials (16) oder des Kolbenwerkstoffs erwärmt wird.

8. Verfahren nach einem der vorangehenden Ansprüche, **dadurch gekennzeichnet, dass** nach dem Abdecken des späteren Kühlkanals (14) Material mit einem, vorzugsweise thermischen, Spritzverfahren auf das Drahtmaterial (16) aufgebracht wird.

9. Verfahren nach Anspruch 8, **dadurch gekennzeichnet, dass** im Rahmen des Spritzverfahrens zumindest zwei unterschiedliche Materialien gleichzeitig oder nacheinander, vorzugsweise als Drähte bereitgestellt, aufgebracht werden, und das Mischungsverhältnis der beiden Materialien durch unterschiedliche Drahtdurchmesser und/oder Vorschubgeschwindigkeiten eingestellt wird.

10. Verfahren nach Anspruch 9, **dadurch gekennzeichnet, dass** als Materialien eine AlSi-Legierung und unlegierter Stahl verwendet werden, und/oder das Mischverhältnis 60 bis 70:30 bis 40 beträgt.

11. Verfahren nach einem der vorhergehenden Ansprüche, wobei das Drahtmaterial durch eine Einrichtung zum Andrücken des Drahtmaterials (16), vorzugsweise ein Randrierwerkzeug, angedrückt wird.

## Claims

1. Method for the manufacture of a piston for an internal combustion engine, in which a region which in the finished piston has a cooling channel (14) and a piston ring groove (20) is first recessed, the subsequent cooling channel is then covered, and finally material for receiving the piston ring is applied, **characterised in that** the subsequent cooling channel is covered by wire material (16) which is provided at a length which is greater than the length necessary for a single piston.

2. Method according to claim 1, **characterised in that** the wire material (16) is unwound continuously from a roll.

3. Method according to either of claims 1 or 2, **characterised in that** the wire material (16) is applied in form-locking relationship.

4. Method according to any of claims 1 to 3, **characterised in that** the wire material (16) is deformed during or after application.

5. Method according to any of the preceding claims, **characterised in that** the wire material (16) has a largely elliptical, rectangular or trapezoidal cross-section.

6. Method according to any of the preceding claims, **characterised in that** after application the wire material (16) is preferably locally limited and preferably heated inductively.

7. Method according to claim 6, **characterised in that** the wire material (16) is heated to just below the melting point of the wire material (16) or the piston material.

8. Method according to any of the preceding claims, **characterised in that**, after covering the subsequent cooling channel (14), material is applied to the wire material (16) by a preferably thermal spray method.

9. Method according to claim 8, **characterised in that**, within the framework of the spray method, at least two different materials are applied simultaneously or successively, preferably provided as wires, and the mixture ratio of the two materials is adjusted by different wire diameters and/or rates of advance.

10. Method according to claim 9, **characterised in that** an AlSi alloy and unalloyed steel are used as the materials, and/or the mixture ratio is 60 to 70:30 to 40.

11. Method according to any of the preceding claims, wherein the wire material is pressed on by a device for pressing on the wire material (16), preferably a knurling tool.

## Revendications

1. Procédé de fabrication d'un piston pour un moteur à combustion interne, où une zone présentant un canal de refroidissement (14) et une rainure de segment de piston (20) sur le piston fini est d'abord chambrée, le futur canal de refroidissement est ensuite recouvert, et un matériau destiné à recevoir le segment de piston est enfin appliqué, **caractérisé en ce que** le futur canal de refroidissement est recouvert par un matériau en forme de fil (16), lequel est préparé avec une longueur supérieure à la longueur exigée pour un seul piston.

2. Procédé selon la revendication 1, **caractérisé en ce que** le matériau en forme de fil (16) est continûment déroulé d'une bobine.

3. Procédé selon la revendication 1 ou 2, **caractérisé en ce que** le matériau en forme de fil (16) est appliqué avec complémentarité de forme.

4. Procédé selon l'une des revendications 1 à 3, **caractérisé en ce que** le matériau en forme de fil (16) est déformé lors de l'application ou après celle-ci.

5. Procédé selon l'une des revendications précédentes, **caractérisé en ce que** le matériau en forme de fil (16) présente une section pratiquement elliptique, rectangulaire ou trapézoïdale.

6. Procédé selon l'une des revendications précédentes, **caractérisé en ce que** le matériau en forme de fil (16) est après application préférentiellement localement délimité, et préférentiellement chauffé par induction.

7. Procédé selon la revendication 6, **caractérisé en ce que** le matériau en forme de fil (16) est chauffé à peine en dessous du point de fusion du matériau en forme de fil (16) ou du matériau du piston.

8. Procédé selon l'une des revendications précédentes, **caractérisé en ce qu'**après couverture du futur canal de refroidissement (14), un matériau est appliqué par processus d'injection sur le matériau en forme de fil (16).

9. Procédé selon la revendication 8, **caractérisé en ce que** lors du processus d'injection, au moins deux matériaux différents sont appliqués simultanément ou successivement, préférentiellement sous forme de fils, et **en ce que** le rapport de mélange des deux matériaux est défini par les diamètres de fil et/ou vitesses d'avance différenciés.

10. Procédé selon la revendication 9, **caractérisé en ce qu'**un alliage AlSi et de l'acier non allié sont utilisés comme matériaux, et/ou **en ce que** le rapport de mélange est de 60 à 70:30 à 40.

11. Procédé selon l'une des revendications précédentes, **caractérisé en ce que** le matériau en forme de fil est pressé par un dispositif de serrage du matériau en forme de fil (16), préférentiellement un outil à moleter.
